# EUROPÄISCHE PATENTSCHRIFT

(11) **EP 2 691 287 B1**
(45) Veröffentlichungstag und Bekanntmachung des Hinweises auf die Patenterteilung: **03.05.2017**
(21) Anmeldenummer: 12713099.5
(22) Anmeldetag: 29.03.2012
(51) Int. Cl.: B62D 21/02

(54) **NUTZFAHRZEUGCHASSIS UND VERFAHREN ZUR HERSTELLUNG EINES PROFILLANGTRÄGERS FÜR EIN SOLCHES NUTZFAHRZEUGCHASSIS**
UTILITY VEHICLE CHASSIS AND METHOD FOR MANUFACTURING A PROFILE LONGITUDINAL BEAM FOR A UTILITY VEHICLE CHASSIS OF SAID TYPE
CHÂSSIS DE VÉHICULE UTILITAIRE ET PROCÉDÉ DE FABRICATION D'UN LONGERON PROFILÉ POUR UN TEL CHÂSSIS DE VÉHICULE UTILITAIRE

(30) Priorität: 30.03.2011 DE 202011000731 U
(43) Veröffentlichungstag der Anmeldung: 05.02.2014
(73) Patentinhaber: Schmitz Cargobull AG, 48341 Altenberge (DE)
(72) Erfinder: RATHMANN, Norbert, 48356 Nordwalde (DE); ZIMMERMANN, Stefan, 48565 Steinfurt (DE); SCHMITZ, Peter, 48341 Altenberge (DE); SCHÜTTE, Olaf, 59387 Ascheberg (DE)
(74) Vertreter: Cohausz & Florack
(86) Internationale Anmeldenummer: PCT/EP2012/055669
(87) Internationale Veröffentlichungsnummer: WO 2012/130962

(56) Entgegenhaltungen:
- EP-A1- 1 527 983
- WO-A1-2011/009204
- DE-U1- 20 022 552
- JP-A- 2009 202 619
- US-A- 5 855 394
- US-A1- 2001 039 712
- US-A1- 2003 227 164
- US-A1- 2010 045 072

## Beschreibung

Die Erfindung betrifft ein Nutzfahrzeugchassis gemäß dem Oberbegriff von Anspruch 1.

Darüber hinaus betrifft die Erfindung Verfahren zum Herstellen eines Profillangträgers für ein Nutzfahrzeugchassis.

Im Nutzfahrzeugbau wird die Grundstruktur der Fahrzeugchassis in der Regel aus einfach geformten Längs-und Querträgern gebildet. Die Träger stützen einerseits die Aufbauten und die Ladefläche ab, auf der im praktischen Einsatz das zu transportierende Gut steht. Anderseits dienen sie zum Befestigen von Anbauteilen des Fahrzeugchassis, bei denen es sich beispielsweise um Fahrwerksteile, wie die Radaufhängung, Federung, Teile der Druckluftversorgung für die Bremseinrichtung etc., um Einrichtungen zum Bewegen, insbesondere Kippen, der Ladefläche oder um Kästen und andere Befestigungseinrichtungen handeln kann, die zum Aufbewahren von für den Betrieb des Fahrzeugs benötigten Hilfsmitteln dienen.

Für Auflieger für Sattelzüge oder konventionelle Anhänger für Lastkraftfahrzeuge kommen üblicherweise Längsträger zum Einsatz, die sich über die Länge des jeweiligen Aufliegers oder Anhängers erstrecken. Beispiele für Längsträger dieser Art sind in der DE 92 15 300 U1 und der DE 197 20 109 A1 beschrieben.

Die Länge der bei Nutzfahrzeugen eingesetzten, sich in Längsrichtung des Fahrzeugchassis erstreckenden Profillangträgern kann beträchtliche Ausmaße annehmen. So beträgt sie bei in Europa eingesetzten Aufliegern regelmäßig mehr als 13 Meter. Dabei müssen die Profillangträger über weite Abstände freitragend die im Fahrbetrieb auftretenden Belastungen aufnehmen.

Die über die Breite des Aufliegers oder Anhängers für Nutzfahrzeuge auftretenden Lasten werden dagegen in der Regel durch Querträgerprofile getragen, die quer zur Längsrichtung des Aufliegers oder Anhängers ausgerichtet sind und auf oder an den Profillangträgern des Chassis abgestützt sind.

Die Form und Stärke der im Fahrzeugbau eingesetzten Profillangträger wird üblicherweise in Abhängigkeit von den im Fahrbetrieb auftretenden Belastungen sowie unter Berücksichtigung der geometrischen Gegebenheiten ausgelegt. Hier besteht einerseits die Forderung nach einem minimalen Gewicht. Anderseits muss eine ausreichende Belastbarkeit auch unter ungünstigen Betriebsbedingungen gewährleistet sein.

Aus der DE 197 20 109 A1 ist ein Leichtbauträger für Fahrzeuge bekannt, der ein vergrößertes Energieaufnahmevermögen pro eingesetzter Trägermasse gewährleistet und gleichzeitig einen belastungsoptimierten Widerstand gegen äußere Kraftbelastungen sichern soll. Hierzu ist der Leichtbauträger als ein im Querschnitt U-förmiger Verbundträger ausgebildet, der aus zwei gleichsinnig mit ihren Profilstegen ineinandergefügten und stets mit ihren Profilflanschen ineinander liegenden Hutprofilen, einem inneren Hutprofil und einem äußeren Hutprofil besteht, wobei die Profil-Steghöhe und/oder die Breite der Profilböden der beiden Hutprofile über die Axiallänge des Verbundträgers unterschiedlich sind. In der Praxis zeigt sich allerdings, dass durch das Ineinandersetzen zweier U-Profile zwar die Biegesteifigkeit eines solchen Profillangträgers verbessert werden kann. Jedoch setzt dies nicht nur speziell geformte und aneinander angepasste Profile voraus, sondern bringt auch das Problem mit sich, dass in dem Profillangträger unvermeidbar Hohlräume entstehen. In diesen Hohlräumen kann sich Feuchtigkeit sammeln, die Korrosion verursacht. Hinzukommt, dass sich durch die bekannte, zwei Langprofile voraussetzende Konstruktion keine entscheidende Gewichtseinsparung erzielen lässt.

Neben dem voranstehend erläuterten Stand der Technik ist aus der JP 2009 202619 A ein Nutzfahrzeugchassis bekannt, bei dem Verstärkungsbleche in den Zwickelbereichen zwischen einem Stegabschnitt und dem oberen und unteren Gurt eines im Querschnitt U-förmigen Langträgers befestigt sind, um dort den Langträger lokal zu verstärken. Die L-förmig gekanteten Verstärkungsbleche werden dazu mit dem Langträger verschweißt, wobei eine Schweißnaht entlang der jeweils dem Steg zugeordneten Längsseite des einen Schenkels des Verstärkungsblechs geführt wird. Der andere Schenkel des Verstärkungsblechs wird durch in die Fläche dieses Schenkels eingebrachte Punktschweißungen am Gurt des Langträgers festgelegt. Zusätzlich können Punktschweißungen auch in der Fläche des am Steg anliegenden Schenkels des Verstärkungsblechs vorgenommen werden. Das Problem eines effektiven und dauerhaften Korrosionsschutzes insbesondere in den Bereichen, in denen die Verstärkungsbleche an dem Langträger anliegen, wird bei diesem Stand der Technik nicht angesprochen.

Vor diesem Hintergrund bestand die Aufgabe der Erfindung darin, ein Nutzfahrzeugschassis anzugeben, das bei kostengünstiger Herstellung und minimalem Gewicht optimale Gebrauchseigenschaften aufweist.

Ebenso sollte ein Verfahren vorgeschlagen werden, das die kostengünstige Herstellung von Profillangträgern für ein solches Nutzfahrzeugchassis ermöglichen.

In Bezug auf das Nutzfahrzeugchassis ist diese Aufgabe erfindungsgemäß dadurch gelöst worden, dass ein solches Chassis die in Anspruch 1 angegebenen Merkmale aufweist.

Um ein erfindungsgemäßes Chassis kostengünstig herstellen zu können, schlägt die Erfindung das in Anspruch 13 Verfahren vor.

Ein erfindungsgemäßes Nutzfahrzeugchassis umfasst wenigstens einen Profillangträger, der ein sich in Längsrichtung des Profillangträgers erstreckendes Langprofil, das mit einer Korrosionsschutzschicht beschichtet ist, und einen Steg aufweist, wobei mindestens an einem Teilstück des Langprofils ein Verstärkungsblech unlösbar befestigt ist. Dabei ist das Langprofil des Profillangträgers durch ein Umformverfahren aus einem Blechmaterial geformt.

Gemäß der Erfindung ist nun bei einem solchen Nutzfahrzeugchassis vorgesehen, dass das Verstärkungsblech ausschließlich form- oder kraftschlüssig mit dem Langprofil verbunden ist.

Die Erfindung geht von dem Grundgedanken aus, den in einem Nutzfahrzeugchassis der erfindungsgemäßen Art verbauten Profillangträger unter Vermeidung von Schweißverbindungen und anderen durch Wärmezufuhr das Substrat des Profillangträgers beeinflussende Verfahren herzustellen. Zu diesem Zweck ist gemäß der Erfindung das mindestens eine Langprofil des Profillangträgers durch Verformung eines Blechmaterials einstückig hergestellt.

Dabei kann sich das betreffende Langprofil über die gesamte Länge des Profillangträgers erstrecken, oder es können mehrere Langprofile gemeinsam den Profillangträger eines erfindungsgemäßen Nutzfahrzeugchassis bilden. Ist nur ein sich über die gesamte Länge des Profillangträgers erstreckendes Langprofil vorgesehen, so hat dies neben einem optimierten Einsatzverhalten den Vorteil, dass Fügestellen vermieden und Montageaufwand eingespart wird.

Den Profillangträger aus zwei oder mehreren, sich jeweils über eine Teillänge des Profillangträgers erstreckenden Langprofilen zusammenzusetzen, kann dagegen den Vorteil haben, dass das Handling der dann kürzeren Langprofile vereinfacht und beispielsweise zum Umformen des Blechmaterials und zum Auftrag der Korrosionsschutzbeschichtung weniger Raum erforderlich ist. Die Verbindung der einzelnen Langprofile zu dem Profillangträger kann beispielsweise durch Schraubverbindungen oder andere kraft- oder formschlüssige Verbindungen erfolgen.

Typischerweise liegen die Wandstärken eines erfindungsgemäßen, aus einem Stahl bestehenden Profillangträgers im Bereich von bis zu 10 mm, wobei in der Praxis typischerweise Blechdicken von 2 - 7 mm, insbesondere 3 - 6 mm, zum Einsatz kommen. Bei dem Blechmaterial, aus dem das Langprofil geformt wird, kann es sich beispielsweise um Stahlgrobblech mit einer Dicke von bis zu 10 mm handeln, wobei sich ein Optimum aus Gewicht und Tragfähigkeit dann ergibt, wenn die Dicke des Blechmaterials des Langprofils im Bereich von 4 - 7 mm, insbesondere 4 - 6 mm oder 4 - 5 mm, liegt. Für diesen Zweck einsetzbar sind beispielsweise konventionelle Stahlwerkstoffe, die für die Kaltverformung in diesem Dickenbereich geeignet sind und für die im praktischen Einsatz auftretenden Belastungen ausreichende mechanische Eigenschaften besitzen. Hierzu zählen beispielsweise kaltverformbare, mikrolegierte Stähle, die in der DIN EN 10149 T1 - T2 aufgezählt sind, insbesondere Stähle mit der Werkstoffnummer 1.0976, 1.0978, 1.0980, 1.0982.

Auch die Wandstärke des jeweils eingesetzten Verstärkungsblechs lässt sich über ein weites Spektrum variieren, so dass es problemlos möglich ist, die Stärke des Verstärkungsblechs an die jeweils zu erwartenden Lasten anzupassen. In der Praxis kommen 1 - 17 mm, insbesondere 2 - 15 mm, dicke Verstärkungsbleche zum Einsatz, die aus einem Stahlwerkstoff oder einem anderen Werkstoff von geeigneter Festigkeit bestehen. Sofern die Dicke eines einzelnen Verstärkungsblechs nicht ausreicht oder es aus anderen Gründen zweckmäßig ist, können erfindungsgemäß auch zwei oder mehr Verstärkungsbleche aufeinander liegend an dem Langprofil des Profillangträgers befestigt werden.

Ein weiteres wesentliches Kennzeichen der Erfindung ist, dass das Langprofil lokal durch ein oder mehrere Verstärkungsbleche verstärkt oder ausgesteift ist. Dies erlaubt es ein hinsichtlich seiner Stärke minimiert ausgelegtes Langprofil des Profillangträgers in bestimmten Abschnitten durch gezielt an ihm befestigte Verstärkungsbleche so zu verstärken oder zu ergänzen, dass beim erfindungsgemäßen Profillangträger im Bereich seines betreffenden Teilstücks eine ausreichende Stärke und Belastbarkeit für die im praktischen Einsatz lokal auftretenden hohen Belastungen gewährleistet ist oder an dem jeweiligen Ort ausreichende Möglichkeiten zum Anbringen weiterer Bauteile geschaffen sind.

Das jeweilige Verstärkungsblech kann sich dabei jeweils nur über eine Teillänge, Teilhöhe oder Teilbreite des Profillangträgers erstrecken, so dass der Träger über bestimmte Abschnitte unverstärkt ist und das Potenzial zur Gewichtsminimierung optimal genutzt ist. Dies schließt die Möglichkeit ein, dass sich das Verstärkungsblech jeweils in einer Richtung vollständig über den Profillangträger erstreckt oder so ausgebildet ist, dass es in Längs- oder Breitenrichtung über den ihm zugeordneten Abschnitt des Profillangträgers hinaus steht. Letzteres kann insbesondere dann zweckmäßig sein, wenn eine vergrößerte Auflagefläche für die Montage eines Anbauteils geschaffen werden soll. D. h., ein erfindungsgemäßes Verstärkungsblech kann sich beispielsweise über die gesamte Länge des Profillangträgers erstrecken, wenn dies für eine den jeweiligen Anforderungen gerecht werdende Aussteifung des Profillangträgers erforderlich ist. Ebenso kann das Verstärkungsblech in Breitenrichtung, d. h. quer zur Längserstreckung des Profillangträgers, seitlich über den Querträger hinaus stehen, um eine maximal große Anlagefläche für das jeweilige Anbauteil zu schaffen. Auch kann das Verstärkungsblech selbst profiliert sein, um ihm eine ausreichende Eigensteifigkeit zu verleihen oder optimale Voraussetzungen für die Befestigung eines Anbauteils zu schaffen. In jedem dieser Fälle findet eine lokale Verstärkung oder beispielsweise zum Befestigen eines Anbauteils nutzbare Ergänzung des Profillangträgers dem Gedanken der Erfindung entsprechend nur in dem Bereich statt, an den in der Praxis besondere Anforderungen gestellt werden. Die nicht mit einem Verstärkungsblech belegten anderen Abschnitte des Profillangträgers besitzen dagegen bei dieser Verwirklichung der Erfindung weiterhin eine minimierte Wandstärke und damit einhergehend ein minimiertes Gewicht.

Grundsätzlich ist es denkbar, das Langprofil eines erfindungsgemäßen Profillangträgers aus Stahlflachprodukten zu fertigen, die aus korrosionsbeständigen, nicht rostenden Stählen bestehen. Gleiches gilt für das Verstärkungsblech. Kostengünstiger lassen sich die Teile eines erfindungsgemäßen Profillangträgers in der Regel jedoch aus Stählen herstellen, die zwar korrosionsempfindlich sind, aber eine höhere Festigkeit bieten. Damit in diesem Fall eine ausreichende Korrosionsbeständigkeit gewährleistet ist, kann das Langprofil wie auch das jeweilige an ihm zu befestigende Verstärkungsprofil vor dem Befestigen mit einer Korrosionsschutzschicht belegt werden.

Gemäß einer für die Praxis besonders wichtigen Ausgestaltung sind deshalb sowohl das jeweilige Verstärkungsblech als auch das jeweilige Langprofil des Profillangträgers jeweils vor dem Befestigen des Verstärkungsblechs an dem Langprofil mit einer Korrosionsschutzschicht versehen. Auf diese Weise befindet sich bei fertig montiertem Profillangträger die Korrosionsschutzschicht auch im Fügespalt zwischen dem Verstärkungsblech und dem Langprofil. Auch im Bereich der Anlagefläche, an der das Verstärkungsblech an dem Langprofil anliegt, ist so ein optimaler Korrosionsschutz gewährleistet, ohne dass es dazu aufwändiger Maßnahmen bedarf. Die Gefahr von Spaltkorrosion und ähnlichen aggressiv fortschreitenden Korrosionsereignissen am Profillangträger besteht in Folge dessen bei einem erfindungsgemäßen Nutzfahrzeugchassis nicht.

Erfindungsgemäß ist das Verstärkungsblech form- oder kraftschlüssig an einer zugeordneten Anlagefläche des Langprofils angeordnet. Abhängig von den örtlichen Gegebenheiten und den im praktischen Einsatz auftretenden Belastungen kann es dabei ausreichen, wenn die Verbindung entweder nur durch Formschluss oder nur durch Kraftschluss hergestellt ist. Eine optimale Wirkung der festen Verbindung ergibt sich allerdings dann, wenn durch sowohl Kraft- als auch Formschluss bewirkt wird, diese beiden Verbindungsarten also in Kombination vorliegen.

Eine kraft- und formschlüssige Verbindung zwischen dem Verstärkungsblech und dem Langprofil kann beispielsweise durch Schraub- oder Nietverbindungen realisiert werden. Jedoch erweist es sich als besonders zweckmäßig, wenn die Verbindung zwischen dem Verstärkungsblech und dem zugeordneten Teilstück des Langprofils durch mindestens eine Durchsetzfügeverbindung hergestellt ist.

Die optional zum Befestigen des Verstärkungsblechs verwendete Verbindungstechnik "Durchsetzfügen" erlaubt es, das jeweilige Verstärkungsblech bei minimaler Beeinträchtigung der Tragfähigkeit des Profillangträgers am Langprofil zu befestigen, wodurch eine weiter reduzierte Dimensionierung des Langprofils möglich ist.

Wie im Einzelnen beispielsweise in der EP 0 284 902 B1 beschrieben, wird zum Durchsetzfügen, auch Clinchen genannt, ein Durchsetzfügewerkzeug eingesetzt, das einen Stempel und eine Matrize umfasst. Der Stempel hat dabei eine eng begrenzte, in der Regel kreisrunde Druckfläche, mit der er gegen die zu fügenden Bauteile drückt. Bei Herstellung der erfindungsgemäß vorgesehenen Durchsetzfügeverbindung zwischen dem Verstärkungsblech und dem zugeordneten Langprofil wird das Verstärkungsblech flach auf den ihm zugeordneten Abschnitt des Langprofils gelegt. Anschließend wird der Stempel von der einen und die Matrize von der anderen Seite her an die zu fügenden Teile angesetzt und ein der Druckfläche des Stempels entsprechender Abschnitt des Verstärkungsblechs bzw. des Langprofils, ähnlich wie beim Tiefziehen, unter plastischer Deformation in die Matrize gedrückt. Die Matrize ist dabei so ausgebildet, dass die Fügezone eine druckknopfähnliche Form mit einer gewissen Hinterschneidung erhält, so dass die zu fügenden Teile form- und kraftschlüssig miteinander verbunden sind.

Im Bereich der fahrzeugtechnischen Anwendungen ist das Durchsetzfügen bisher nur für die Verbindung dünnwandiger Karosseriebauteile eingesetzt worden. Überraschend hat sich nun herausgestellt, dass sich die Vorteile dieser Verbindungstechnik auch im Nutzfahrzeugbereich für die Verbindung von Langprofilen und Verstärkungsblechen nutzen lassen, die eine gegenüber den in konventioneller Weise für das Durchsetzfügen eingesetzten Blechmaterialien deutlich höhere Wandstärke und Festigkeit bzw. Härte aufweisen.

So lassen sich in erfindungsgemäßer Weise insbesondere aus einem Stahlwerkstoff bestehende Langprofile partiell mit einem ebenfalls aus einem Stahl bestehenden Verstärkungsblech verstärken. Dies erlaubt es, zwecks Gewichtseinsparung ein Profillangträger-Langprofil zu verwenden, das an bestimmten Abschnitten für die im praktischen Einsatz auftretenden Kräfte unterdimensioniert ist. Indem ein solches Langprofil in den betreffenden Abschnitten mit Hilfe des Verstärkungsblechs gezielt verstärkt wird, kann der durch dieses Langprofil gebildete Profillangträger auch dort den jeweils auftretenden Anforderungen sicher standhalten.

In diesem Zusammenhang wirkt es sich besonders vorteilhaft aus, dass die Festigkeit einer erfindungsgemäß vorgesehenen Durchsetzfügeverbindung regelmäßig über dem Niveau der Festigkeit einer Punktschweißverbindung liegt. Die Dauerfestigkeit der Durchsetzfügeverbindung ist gleichzeitig höher als bei Punktschweißverbindungen, da bei der Durchsetzfügeverbindung keine Kerbwirkung auftritt und auch keine Wärmeeinflusszone entsteht, in der es zu das jeweilige Bauteil schwächenden Gefügeveränderungen kommt.

Ebenso günstig wirkt es sich aus, dass Durchsetzfügeverbindungen mit einfachen Werkzeugen und ohne Zusatzwerkstoffe oder -bauteile hergestellt werden können, wodurch geringe Bearbeitungszeiten und Herstellkosten erzielt werden.

Der Umstand, dass das Durchsetzfügen kalt durchgeführt wird, trägt zusätzlich zu einer Kostenminimierung bei. So ist es problemlos möglich, sowohl das jeweilige Langprofil als auch das an ihm zu befestigende Verstärkungsblech vor der Herstellung der Durchsetzfügeverbindung mit einem vor Korrosion schützenden metallischen Schutzüberzug, wie einer Verzinkung, zu versehen. Im Zuge der Erzeugung der Durchsetzfügeverbindung bleibt der jeweilige Schutzüberzug in der Regel vollständig erhalten, so dass, wie bereits erwähnt, auch im Bereich der Durchsetzfügeverbindung ein dauerhafter Korrosionsschutz gesichert ist, ohne dass dazu zusätzliche Maßnahmen erforderlich sind.

Sollten sich im Zuge der Herstellung der Durchsetzfügeverbindung in deren Umfeld Schäden an der Korrosionsschutzschicht einstellen, so können diese auf einfache Weise durch einen lokal begrenzten Auftrag einer Reparaturschicht beseitigt werden.

Alternativ oder ergänzend zu einem Korrosionsschutz, der auf einer auf das jeweilige Bauteil aufgetragenen metallischen Schutzschicht basiert, können auch Folien, insbesondere Kunststofffolien, oder andere nicht metallische Beschichtungen als Korrosionsschutz auf einen erfindungsgemäßen Profillangträger oder seine Einzelteile aufgebracht werden. Dies kann beispielsweise auch in Bereichen des Profillangträgers zweckmäßig sein, in denen es aufgrund von erhöhten Steinschlags, in Folge der Umformung des Stahlflachprodukts zu dem Langprofil oder in Folge der Erzeugung der festen Verbindung zwischen dem Verstärkungsblech und dem Langprofilträger zu Beschädigungen einer zuvor jeweils aufgebrachten metallischen Schutzschicht kommt.

Mit der Erfindung ist es möglich, für Anwendungen im Nutzfahrzeugbau Profillangträger einzusetzen, deren Wandstärke generell um mindestens 15 % gegenüber den für dieselbe Anwendung bisher üblicherweise verwendeten Profilelementen vermindert ist. Die damit einhergehende Gewichtsersparnis kann zur Erhöhung der Nutzlast des jeweiligen Fahrzeugs genutzt werden und wirkt sich günstig in Bezug auf den Energieverbrauch aus. Profillangträger

Die erfindungsgemäße Herstellung des Langprofils durch Umformung eines Blechmaterials ermöglicht es auf einfache Weise, das Blechmaterial so zuzuschneiden, dass im Zuge seiner Umformung alle an dem Langprofil benötigten Formelemente ausgebildet werden. So können an dem Langprofil des Profillangträgers ein oder mehrere seitlich von dem Steg abstehende Gurtabschnitte einstückig ausgebildet werden, die, wie bei konventionell geformten Profilen üblich, zumindest partiell als Ober- oder Untergurt wirken. Erforderlichenfalls kann sich selbstverständlich ein einziger Gurtabschnitt über die gesamte Länge des jeweiligen Langprofils erstrecken, wenn dies im Hinblick auf die geforderte Formsteifigkeit und das geforderte Tragvermögen des Langprofils zweckmäßig ist.

Alternativ oder ergänzend zu einer zumindest streckenweise einstückigen Anformung eines oder mehrerer Gurtabschnitte an den Steg des Langprofils ist es auch möglich, ein zu diesem Zweck geformtes Verstärkungsblech zu verwenden, das in erfindungsgemäßer Weise form- und kraftschlüssig an dem Langprofil befestigt wird. So kann beispielsweise ein zur einen Seite des Stegs rechtwinklig von diesem abstehender Gurtabschnitt einstückig mit dem Steg verbunden sein, während ein in die entgegengesetzte Richtung seitlich von dem Steg abstehender Gurtabschnitt durch ein Verstärkungsblech gebildet wird, das auf den einstückig mit dem Steg verbundenen Gurtabschnitt aufgelegt ist, wobei die Breite des Verstärkungsblechs so bemessen ist, dass es in zum Gurtabschnitt entgegengesetzter Richtung seitlich über den Steg hinaus steht.

Besonders geeignet für die erfindungsgemäß vorgesehene Art und Weise ihrer partiellen Verstärkung sind Profillangträger, die im Querschnitt I-, T-, U- oder Z-förmig ausgebildet sind. Bei all diesen Profillangträgerformen sind jeweils Gurt-, Schenkel- oder Stegabschnitte vorhanden, die eine ebene, für das Durchsetzfügen günstige Anlagefläche für das jeweilige Verstärkungsblech bieten. So kann beispielsweise für die Befestigung einer Fahrwerkskomponente an dem Profillangträger das Verstärkungsblech am Steg des jeweiligen Langprofils des Profillangträgers anliegen, um beispielsweise eine Schraub- oder Bolzenbefestigung mit quer zur Längserstreckung des jeweiligen Profillangträgers und horizontal ausgerichteter Ausrichtung zu bewerkstelligen. Ebenso kann es aber beispielsweise in den Bereichen, in denen eine vertikal ausgerichtete Befestigung erfolgen soll, zweckmäßig sein, das Verstärkungsblech an einem Gurt des Profillangträgers anzulegen. Dies kann beispielsweise an den für die Befestigung einer Ladefläche oder eines allgemeinen Anbauteils, wie eines Staukastens oder eines Stützbocks, sinnvoll sein.

Im Fall, dass die Befestigung des Verstärkungsblechs an dem Langprofil des Profillangträgers durch Durchsetzfügen erfolgen soll, können die Anordnung des Verstärkungsblechs sowie die Richtung, in der das Durchsetzfügen durchgeführt wird, jeweils so ausgewählt werden, dass im jeweiligen Verstärkungsbereich für das dort am Profillangträger zu montierende Anbauteil eine optimale Anlagefläche bereitsteht. So kann es beispielsweise dann, wenn an einem Profillangträger in erfindungsgemäßer Weise Befestigungspunkte für Querträger oder andere auf dem Profillangträger aufzulegende Bauelemente geschaffen werden sollen, zweckmäßig sein, das Verstärkungsblech auf der Seite des jeweiligen Profilgurts anzulegen, die dem Steg des Profillangträgers zugeordnet ist. Wenn dabei gleichzeitig die Fügerichtung beim Herstellen der Durchsetzfügeverbindung von der dem Anbauteil zugeordneten Seite hin zum Verstärkungsblech gerichtet ist, steht zum Positionieren des jeweiligen Anbauteils eine einwandfrei ebene Anlagefläche zur Verfügung.

Eine hohe Formsteifigkeit des in einem erfindungsgemäßen Nutzfahrzeugchassis eingesetzten Profillangträgers kann dadurch erreicht werden, dass sich zumindest abschnittsweise entlang der oberen und entlang der unteren Längskante des Stegs jeweils ein Gurtabschnitt des Profillangträgers erstreckt. Heute zur Verfügung stehende Umformverfahren, wie das Rollieren, und Zuschnittverfahren, wie das Laser- oder Hochdruckschneiden, erlauben es, das Langprofil des Profillangträgers auch dann aus einem Stück herzustellen, wenn der Abstand der Gurtabschnitte über die Länge des Langprofils des Profillangträgers variiert. Durch die Variation des Abstands der Gurtabschnitte bzw. der Höhe des Stegs des Langprofils eines erfindungsgemäßen Profillangträgers lässt sich die Form des Langprofils problemlos an die in der Praxis jeweils auftretenden Belastungen und räumlichen Anforderungen anpassen. Auch können auf diese Weise an dem Langprofil Aufnahmen oder Ablagen ausgebildet werden, an denen beispielsweise ein Querträger des erfindungsgemäßen Nutzfahrzeugs abgestützt wird.

Genauso lässt sich durch Variation der Steghöhe und des Verlaufs der an den Steg angeformten Gurtabschnitte der von dem erfindungsgemäßen Nutzfahrzeugchassis in Anspruch genommene Raum an den tatsächlich zur Verfügung stehenden Raum anpassen. Auf diese Weise eignet sich ein erfindungsgemäßes Nutzfahrzeugchassis insbesondere für die Herstellung eines Aufliegers für einen Sattelzug. Von den Chassis solcher Auflieger wird in der Regel gefordert, dass sie in dem Bereich, in dem sie im an das Zugfahrzeug angekoppelten Zustand das Chassis des Zugfahrzeugs überlagern, nur eine minimale Bauhöhe haben, während sie insbesondere in den freitragenden Abschnitten zwischen dem Zugfahrzeug und der oder den Achsen des Aufliegers eine größere Höhe aufweisen können, um die dort geforderte Biegesteifigkeit in Schwerkraftrichtung zu gewährleisten.

Eine gerade für Auflieger von Sattelzügen besonders geeignete und durch die Erfindung ebenfalls auf einfache und kostengünstige Weise zu realisierende andere Möglichkeit der Anpassung an die jeweiligen räumlichen Gegebenheiten besteht bei einem Nutzfahrzeugchassis der erfindungsgemäßen Art darin, dass der Profillangträger einen ersten Längsabschnitt und einen zweiten Längsabschnitt aufweist, dass in Gebrauchsposition die Hauptrichtung der Längserstreckung des ersten Längsabschnitts in einer anderen Horizontalebene verläuft als die Hauptrichtung der Längserstreckung des anderen Längsabschnitts und dass die Längsabschnitte sprungfrei ineinander übergehen. Bei dieser Ausgestaltung der Erfindung verspringt also der eine Längsabschnitt des Langprofils gegenüber dem anderen Längsabschnitt nach Art einer Abkröpfung in eine andere Horizontalebene. Dabei ist zwischen den beiden Längsabschnitten ein kontinuierlicher Übergang gebildet, in dem es zu keinen lokal eng begrenzten Belastungsspitzen kommt, welche andernfalls zu einem Bauteilversagen führen könnten oder eine deutlich stärkere Auslegung des Übergangsbereichs erforderlich machen würden.

Dabei ist es auch bei der voranstehend beschriebenen Ausgestaltung möglich, die Höhe des Stegs des Langprofils und damit einhergehend die Höhe des Nutzfahrzeugchassis dadurch an den jeweils zur Verfügung stehenden Raum anzupassen, dass die Höhe des Stegs im einen Längsabschnitt geringer ist als im anderen Längsabschnitt und dass sich die Höhe des Stegs im Bereich des Übergangs von dem einen Längsabschnitt zu dem anderen Längsabschnitt kontinuierlich ändert.

Ein erfindungsgemäßer Profillangträger für ein Fahrzeugchassis besteht typischerweise aus Metallwerkstoff, insbesondere aus einem Stahl- oder Leichtmetallwerkstoff. Ebenso ist es möglich, den Profillangträger aus mehreren unterschiedlichen Werkstoffen zu fertigen. So ist es beispielsweise denkbar, durch Verwendung geeigneter Verbindungstechniken (s. EP 0 868 237 B1) Profillangträger in Hybridbauweise unter Verwendung von zueinander völlig unterschiedlichen Materialien zu fertigen. An mindestens einem Teilstück des erfindungsgemäßen Profillangträgers liegt ein Verstärkungsblech an, das fest und unlösbar mit dem zugeordneten Abschnitt des Profillangträgers verbunden ist. Gemäß einer vorteilhaften Ausgestaltung der Erfindung ist dabei die Verbindung zwischen dem Verstärkungsblech und dem zugeordneten Teilstück des Profillangträgers durch mindestens eine Durchsetzfügeverbindung hergestellt.

Wie voranstehend erläutert, ist es so möglich, einen hinsichtlich seiner Stärke minimiert ausgelegten Profillangträger in bestimmten Abschnitten durch gezielt an ihm befestigte Verstärkungsbleche so zu verstärken oder zu ergänzen, dass der Profillangträger im Bereich seiner betreffenden Teilstücke eine ausreichende Stärke für die dort im praktischen Einsatz lokal auftretenden hohen Belastungen gewährleistet oder an dem jeweiligen Ort ausreichende Möglichkeiten zum Anbringen weiterer Bauteile geschaffen sind.

Das jeweilige Verstärkungsblech kann sich dabei jeweils nur über eine Teillänge, Teilhöhe oder Teilbreite des Profillangträgers erstrecken, so dass der Träger über weite Abschnitte unverstärkt ist und das Potenzial zur Gewichtsminimierung optimal genutzt ist.

Den voranstehenden Erläuterungen entsprechend umfasst das erfindungsgemäße Verfahren zum Herstellen eines Profillangträgers für ein Nutzfahrzeugchassis der erfindungsgemäßen Art folgende Arbeitsschritte:
a) Bereitstellen eines Stahlflachprodukts,
b) Umformen des Stahlflachprodukts zu einem Langprofil,
c) Bereitstellen und Anordnen eines Verstärkungsblechs an einem Teilstück des umgeformten Langprofils,
d) Erzeugen einer ausschließlich form- oder kraftschlüssigen Verbindung zwischen dem Verstärkungsblech und dem umgeformten Langprofil, um das Verstärkungsblech unverlierbar an einer Anlagefläche des Langprofils zu befestigen und eine lokale Verstärkung oder Aussteifung des Langprofils zu bewirken.

In Fällen, in denen eine Korrosionsschutzbeschichtung des Langprofils vorgenommen werden soll, kann diese Beschichtung vor der Umformung auf das bereitgestellte Stahlflachprodukt aufgetragen werden, oder das Langprofil wird nach dem Umformen jedoch vor der Befestigung des Verstärkungsblechs mit der Korrosionsschutzbeschichtung versehen.

Der Vorteil des Auftrags der Korrosionsschutzschicht auf vor dem Umformen erfolgenden Auftrag der Schutzschicht auf das umzuformende Stahlflachprodukt besteht darin, dass das beispielsweise als zugeschnittene Platine vorliegende Stahlflachprodukt im flachen, unverformten Zustand mit der Korrosionsschutzbeschichtung versehen wird, ohne dass dazu ein besonderer Aufwand erforderlich ist. Dementsprechend gering sind die für die Beschichtung anfallenden Kosten. An dem mit der Beschichtung zu versehenden Stahlflachprodukt können dabei bereits alle erforderlichen Öffnungen und andere Formelemente vorgesehen sein, die benötigt werden, um das Langprofil eines erfindungsgemäßen Profillangträgers mit seinen gegebenenfalls einstückig angeformten Gurtabschnitten zu formen.

In Fällen, in denen es aus prozesstechnischen Gründen vorteilhaft ist, oder in Fällen, in denen beispielsweise die Gefahr besteht, dass es in Folge der Umformung des Stahlflachprodukts zu Abplatzungen einer auf dem Stahlflachprodukt vorhandenen Korrosionsschutzschicht kommt, kann es jedoch auch zweckmäßig sein, zunächst das als passender Zuschnitt vorliegende Stahlflachprodukt im unbeschichteten Zustand umzuformen und die Korrosionsschutzbeschichtung auf das aus dem Stahlflachprodukt fertig geformte Langprofil aufzutragen.

Unabhängig davon, zu welchem Zeitpunkt die Korrosionsschutzbeschichtung aufgetragen wird, hat es sich als vorteilhaft herausgestellt, wenn die jeweilige Korrosionsschutzbeschichtung als Zinklamellenüberzug aufgetragen wird. Lamellenüberzüge dieser Art bestehen in der Regel aus Zn- oder Al- oder Mischungen von Zn- und Al-Lamellen, die in einer anorganischen Matrix gebunden sind. Die die Beschichtung bildende Masse wird durch Tauchen oder Spritzen auf das jeweils zu beschichtende Objekt

aufgebracht und anschließend bei Objekttemperaturen von 200 °C bis < 250 °C eingebrannt. Selbst bei hochfesten Stählen kommt es in diesem Temperaturbereich nicht zum Anlassen, so dass, anders als beim bei deutlich höheren Temperaturen durchgeführten Feuerverzinken oder Feueraluminieren, mit dem Auftrag der Beschichtung auch keine Festigkeitsverluste einhergehen.

Heute zur Verfügung stehende Rolliereinrichtungen erlauben es, auch Stahlflachprodukte, die eine im hier interessierenden Bereich liegende Dicke aufweisen, mit hoher Produktivität und Fertigungsgenauigkeit zu einem Langprofil umzuformen. Dabei gelingt es, durch Kombination mehrerer Rollierstationen Langprofile zu formen, bei denen der Steg eine über die Länge des Langprofils variierte Höhe aufweist. Ebenso ist es auf diese Weise möglich, Abkröpfungen oder andere Formelemente der voranstehend beschriebenen Art auszubilden.

Nachfolgend wird die Erfindung anhand einer ein Ausführungsbeispiel darstellenden Zeichnung näher erläutert. Es zeigen jeweils schematisch:
- Fig. 1: einen Profillangträger für ein Nutzfahrzeugchassis in einer perspektivischen Ansicht;
- Fig. 2: den Profillangträger in einem Querschnitt entlang der in Fig. 1 eingezeichneten Schnittlinie X-X;
- Fig. 3: den Profillangträger in einem Querschnitt mit einem daran befestigten Fahrwerksteil entlang der in Fig. 1 eingezeichneten Schnittlinie Y-Y.
- Fig. 4: einen weiteren Profillangträger für ein Nutzfahrzeugchassis in einer perspektivischen Ansicht;
- Fig. 5: ein Nutzfahrzeugchassis für einen Sattelauflieger eines Sattelzugs in einer perspektivischen Ansicht;
- Fig. 6: einen in dem Nutzfahrzeugchassis verbauten Profillangträger in seitlicher Ansicht;
- Fig. 7: einen dem in Fahrtrichtung vorderen Ende des Nutzfahrzeugchassis zugeordneten Abschnitt des Profillangträgers;
- Fig. 8: den Abschnitt gemäß Fig. 7 in einem Schnitt entlang der in Fig. 7 eingezeichneten Schnittlinie X-X;
- Fig. 9: den Abschnitt gemäß Fig. 7 in einem Schnitt entlang der in Fig. 7 eingezeichneten Schnittlinie Y-Y;
- Fig. 10: den Längenabschnitt gemäß Fig. 7 in einem Schnitt entlang der in Fig. 7 eingezeichneten Schnittlinie Z-Z.

Bei dem in den Figuren dargestellten Profillangträger 1 handelt es sich um den Längsträger eines hier weiter nicht dargestellten Chassis für den Auflieger eines hier ebenfalls nicht gezeigten Sattelzugs. In der Praxis erstreckt sich der Profillangträger 1 über einen wesentlichen Teil der Länge des betreffenden Aufliegers.

Der Profillangträger 1 umfasst ein Z-förmiges Langprofil 1a, das einstückig aus einem verzinkten, 4 - 5 mm dicken Grobstahlblech geformt ist. Das Langprofil 1a weist dabei einen in Einbauposition vertikal ausgerichteten Steg 2, einen oberen Gurtabschnitt 3, der an den oberen Längsrand des Stegs 2 angeformt und im rechten Winkel von dem Steg 2 seitlich absteht, und einen unteren Gurtabschnitt 4 auf, der an den unteren Längsrand des Stegs 2 angeformt und im rechten Winkel von dem Steg 2 seitlich in eine zum Steg 2 entgegengesetzte Richtung absteht.

Das Langprofil 1a des Profillangträgers 1 ist an seinen Teilstücken T1,T2,T3, die im praktischen Einsatz einer besonderen Belastung unterworfen sind, durch jeweils ein Verstärkungsblech 5,6,7 verstärkt.

Die ebenfalls mit einer Zinkbeschichtung als Korrosionsschutz versehenen Verstärkungsbleche 5,6,7 bestehen beispielsweise aus einem 6 mm dicken höherfesten Stahl. Dabei ist das eine Verstärkungsblech 5 an der dem Gurtabschnitt 3 zugewandten Seitenfläche 8 des Stegs 2 angeordnet, das zweite Verstärkungsblech 6 in Längsrichtung L nach hinten versetzt zu dem Verstärkungsblech 5 auf den oberen Gurtabschnitt 3 aufgelegt und das dritte Verstärkungsblech 7 in Längsrichtung L entgegengesetzt zum Verstärkungsblech 6 gegenüber dem Verstärkungsblech 5 zur Stirnseite des Profilelements 1 hin versetzt an der dem Steg 2 zugeordneten Unterseite 9 des Gurts 3 befestigt.

Die Verstärkungsbleche 5 - 7 sind mit dem jeweils zugeordneten Steg 2 bzw. Gurtabschnitt 3 jeweils durch Durchsetzfügeverbindungen D1, D2, D3 verbunden, die in regelmäßigen Abständen in Längsrichtung L beabstandet zueinander und bezogen auf die jeweilige Schmalseite der Verstärkungsbleche 5 - 7 mittig ausgerichtet sind. Die Durchsetzfügeverbindungen D1 - D3 sind in konventioneller Weise mit Hilfe eines hier nicht dargestellten Durchsetzfügewerkzeugs so hergestellt worden, dass im Bereich der jeweiligen Fügeverbindung D1 - D3 das Material des jeweiligen Verstärkungsblechs 5 - 7 durch Ausbildung einer leichten Hinterschneidung jeweils form- und kraftschlüssig, unlösbar und fest mit dem Material des zugeordneten Stegs 2 bzw. Gurts 3 des Langprofils 1a verbunden ist.

Die Fügerichtung F ist dabei jeweils so gewählt worden, dass an der zum Anlegen eines Bauelements bestimmten Seite der Durchsetzfügeverbindungen D1 - D3 eine weitestgehend ebene Anlagefläche gebildet ist. So ist beim am Steg 2 anliegenden Verstärkungsblech 5 der nicht gezeigte Stempel von der dem Gurtabschnitt 4 zugeordneten Seite zuerst in das Verstärkungsblech 5 und danach in den Steg 2 gedrückt worden, so dass hut- oder druckknopfförmige Ausstülpungen 10 der so erzeugten Durchsetzfügeverbindungen D1 auf der dem Gurtabschnitt 3 zugeordneten Seite über den Steg 2 hinaus stehen. Genauso ist beim Verstärkungsblech 6 der nicht gezeigte Stempel von dessen freier Oberseite her zuerst in das Verstärkungsblech 6 und danach in den Gurtabschnitt 3 gedrückt worden, so dass die jeweilige Ausstülpung 11 der so erzeugten Durchsetzfügeverbindungen D2 auf der dem Steg 2 zugeordneten Unterseite über den Gurtabschnitt 3 hinaus stehen. Beim Verstärkungsblech 7 ist dagegen der nicht gezeigte Stempel von dessen Oberseite her in den Gurtabschnitt 3 und dann erst in das Verstärkungsblech 7 gedrückt worden, so dass die jeweilige Ausstülpung 12 der so erzeugten Durchsetzfügeverbindungen D3 auf der dem Steg 2 zugeordneten Unterseite über den Gurtabschnitt 3 hinaus stehen.

In das erste Verstärkungsblech 5 ist eine zusätzlich durch den Steg 2 führende, quer zur Längsrichtung L ausgerichtete Befestigungsöffnung 13 für ein Fahrwerksbauteil 14 eingeformt, bei dem es sich hier beispielsweise um ein Federbockgehäuse handelt.

Das Fahrwerksbauteil 14 liegt mit seinem einen Schenkel 15 an der dem Gurtabschnitt 3 zugeordneten Seite des Stegs 2 im Bereich des zwischen zwei der Durchsetzfügeverbindungen D1 vorhandenen Abständen an und ist zusätzlich mit einem Absatz an der Unterseite des Gurtes 4 abgestützt. Mittels einer durch die Befestigungsöffnung 13 und eine entsprechende, hier nicht sichtbare Durchgangsöffnung des Schenkels 15 gesteckten Schraube 16 ist das Fahrwerksbauteil 14 an dem Langprofil 1a des Profillangträgers 1 fixiert.

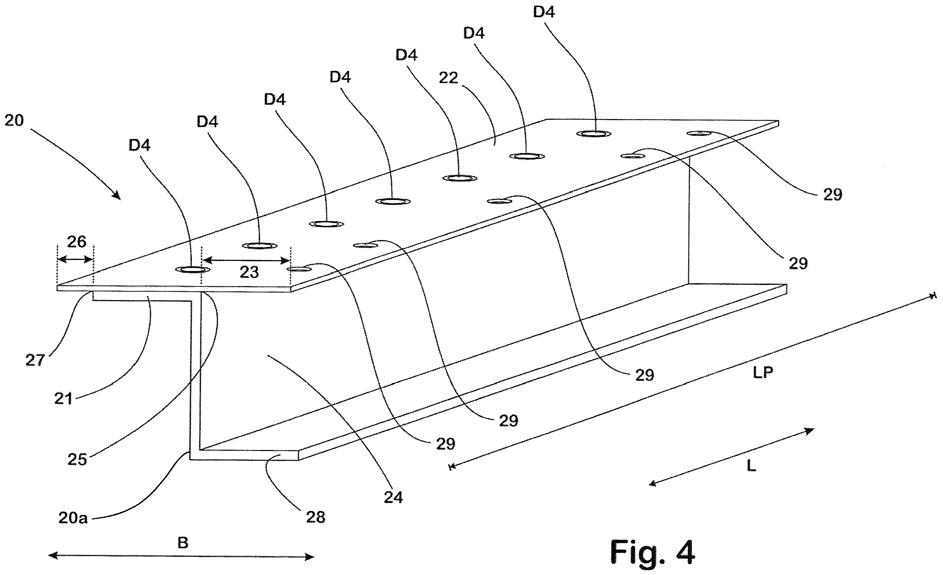

Der in Fig. 4 dargestellte, wie das Z-förmige Langprofil 1a geformte Profillangträger 20 ist ebenfalls aus Stahl hergestellt. Auf seinem oberen Gurtabschnitt 21 liegt ein Verstärkungsblech 22 auf, das sich über die gesamte Länge LP des Profillangträgers 20 erstreckt.

Gleichzeitig steht das Verstärkungsblech 22 in der quer zur Längsrichtung L gemessenen Breitenrichtung B des Profillangträgers 20 jeweils seitlich über den oberen Gurtabschnitt 21 hinaus. Der Überstand 23 des Verstärkungsblechs 22 über die dem Steg 24 zugeordnete Längskante 25 des oberen Gurts 21 ist dabei größer als der Überstand 26, mit dem das Verstärkungsblech 22 über die vom Steg 24 abgewandte Längskante 27 des oberen Gurts 21 hinaus steht. In den über den Steg 24 hinaus stehenden und dementsprechend oberhalb des unteren Gurts 28 des Langprofils 20a angeordneten Abschnitt des Verstärkungsblechs 22 sind Durchgangsöffnungen 29 eingeformt, die beispielsweise zum Befestigen einer auf das Verstärkungsblech aufgelegten, hier nicht gezeigten Ladefläche eines Nutzfahrzeugs genutzt werden können.

Über in regelmäßigen Abständen in Längsrichtung L verteilte und bezogen auf die Breite des oberen Gurts 21 mittig platzierte Durchsetzfügeverbindungen D4 ist das Verstärkungsblech 22, wie für die Verstärkungsbleche 5 - 7 bereits beschrieben, mit dem Langprofil 20a des Profillangträgers 20 fest verbunden.

Durch das Verstärkungsblech 22 ist auf diese Weise nicht nur der obere Gurtabschnitt 21 des Langprofils 20a des Profillangträgers 20 verstärkt, sondern auch eine optimal großflächige Auflagefläche für ein jeweils an dem Profillangträger 20 abzustützendes befestigendes Bauteil geschaffen.

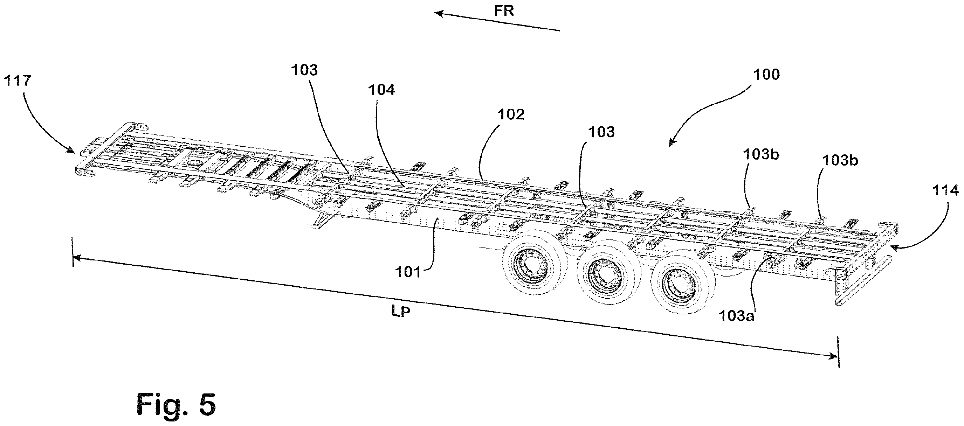

Das in Fig. 5 gezeigte Nutzfahrzeugchassis 100 ist zusammengesetzt aus zwei Profillangträgern 101, 102, die sich in Längsrichtung L über die gesamte mehr als 13 m große Länge LC des Nutzfahrzeugchassis 100 erstrecken. Die Profillangträger 101,102 tragen Querträger 103, die quer zur Längsrichtung L ausgerichtet den zwischen den Profillangträgern 101,102 bestehenden Abstand überbrücken und mit ihren Endabschnitten 103a,103b seitlich nach außen über die Profillangträger 101,102 hinaus stehen. Zusätzlich sind in dem seitlich durch die Profillangträger 101, 102 begrenzten Raum Hilfslangträger 104 angeordnet, die in gleichmäßigen Abständen zueinander verteilt achsparallel zu den Profillangträgern 101, 102 ausgerichtet sind. Auf der Oberseite der Profillangträger 101, 102 und der Querträger 103 ist bei fertig montiertem, hier nicht gezeigtem Auflieger die Ladefläche des Aufliegers abgestützt.

Die Profillangträger 101, 102 umfassen jeweils ein durch Rollieren eines 5 mm dicken, aus einem hochfesten Stahl bestehenden Stahlflachprodukts durch Rollieren geformtes, im Querschnitt Z-förmiges Langprofil 105, das sich über die gesamte Länge LC erstreckt.

Das Stahlflachprodukt, aus dem das Langprofil 105 durch den Rolliervorgang geformt worden ist, lag dabei als an die Form des zu formenden Langprofils angepasste Platine vor, in die bereits sämtliche für die Befestigung von hier nicht gezeigten Anbauteilen sowie die Lagerung und Verschraubung der Querträger 103 mit dem jeweiligen Profillangträger 101,102 benötigten Bohrungen 106 und Aufnahmen 107 eingeformt sind. Durch die Aufnahmen 107 sind die Querträger 103 mit ihren seitlich über den jeweiligen Profillangträger 101,102 hinaus stehenden Endabschnitten 103a,103b geschoben. Die Bohrungen 106 können zum Befestigen von Anbauteilen oder Verstrebungen an dem fertig montierten Nutzfahrzeugchassis 100 genutzt werden.

Vor seinem als Rollieren ausgeführten Kaltverformen ist das betreffende Stahlflachprodukt im kontinuierlichen Durchlauf durch eine hier nicht gezeigte Beschichtungsanlage gelaufen, in der auf die Platine durch Eintauchen in ein entsprechendes Bad eine Zinklamellenbeschichtung aufgetragen worden ist.

Auf den Auftrag der Zinklamellenbeschichtung folgend hat das Stahlflachprodukt einen hier ebenfalls nicht gezeigten Ofen durchlaufen, in dem das Stahlflachprodukt auf eine Temperatur von ca. 220 °C gebracht worden ist, um die Zinklamellenbeschichtung in an sich bekannter Weise auf dem Stahlsubstrat des jeweiligen Langprofils 105 einzubrennen.

Im Anschluss an den Einbrennvorgang ist das Stahlflachprodukt in die hier ebenso nicht dargestellte Rolliereinrichtung eingespeist worden, in der aus dem mit der Korrosionsschutzbeschichtung versehenen Stahlflachprodukt das jeweilige Langprofil 105 geformt worden ist.

Alternativ zu der voranstehend beschriebenen Abfolge der Arbeitsschritte könnte das Stahlflachprodukt zunächst im unbeschichteten Zustand durch Rollieren zu dem Langprofil geformt, anschließend die Zinklamellenschicht beispielsweise durch Spritzapplikation aufgetragen und dann das Einbrennen vorgenommen werden.

Das derart einstückig ausgeführte Langprofil 105 der Profillangträger 101,102 weist jeweils einen Steg 110 auf, der in Montagestellung im Wesentlichen vertikal ausgerichtet ist. Entlang der oberen Kante des Stegs 110 verläuft ein oberer Gurtabschnitt 111, der in einem rechten Winkel seitlich von dem Steg 110 absteht und sich über die gesamte Länge des jeweiligen Profillangträgers 101,102 erstreckt. In gleicher Weise ist einstückig an die untere Kante des Stegs 110 ein unterer Gurtabschnitt 112 angeformt, der sich ebenfalls im rechten Winkel zum Steg 110 jedoch in der zur Ausrichtung des oberen Gurtabschnitts 111 entgegengesetzten Richtung nach seitlich außen ausgerichtet über die gesamte Länge des jeweiligen Profillangträgers 101,102 erstreckt.

Die Höhe des Stegs 110 ist über die Länge des Langprofils variiert. So verlaufen die Gurtabschnitte 111,112 in einem ersten Längenabschnitt 113, der an der in Fahrtrichtung FR hinten liegenden Rückseite 114 des Nutzfahrzeugchassis 100 beginnend und bis zu einem Übergangsabschnitt 115 reichend beim hier gezeigten Beispiel etwa zwei Drittel der Länge des jeweiligen Langprofils 101, 102 einnimmt, in einer Höhe HS1 beabstandet zueinander parallel.

Im Übergangsabschnitt 115 nähern sich die oberen Gurtabschnitte 111,112 in Fahrtrichtung FR gesehen kontinuierlich an. Dabei nimmt die Höhe HS des Stegs 110 stetig und sprungfrei ab, bis die Gurtabschnitte 111,112 einen zweiten Längsabschnitt 116 des Langprofils 105 erreichen, der in Fahrtrichtung FR vom Übergangsabschnitt 115 bis zur vorderen Stirnseite 117 des Nutzfahrzeugchassis 100 reicht.

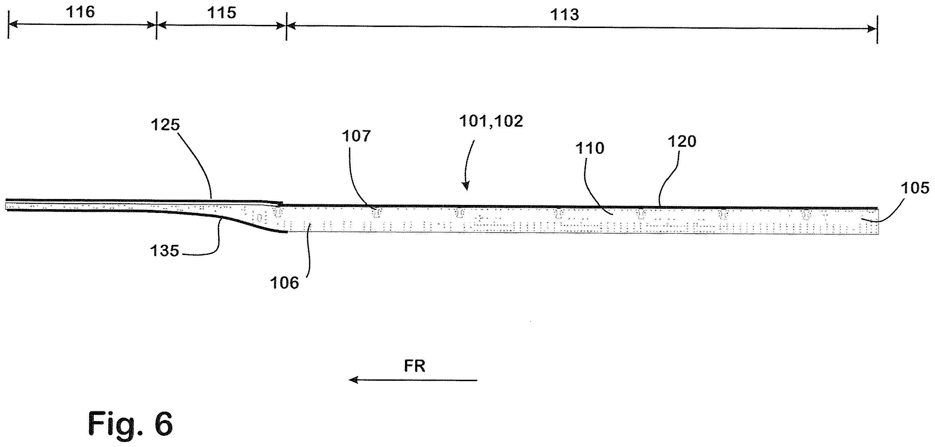

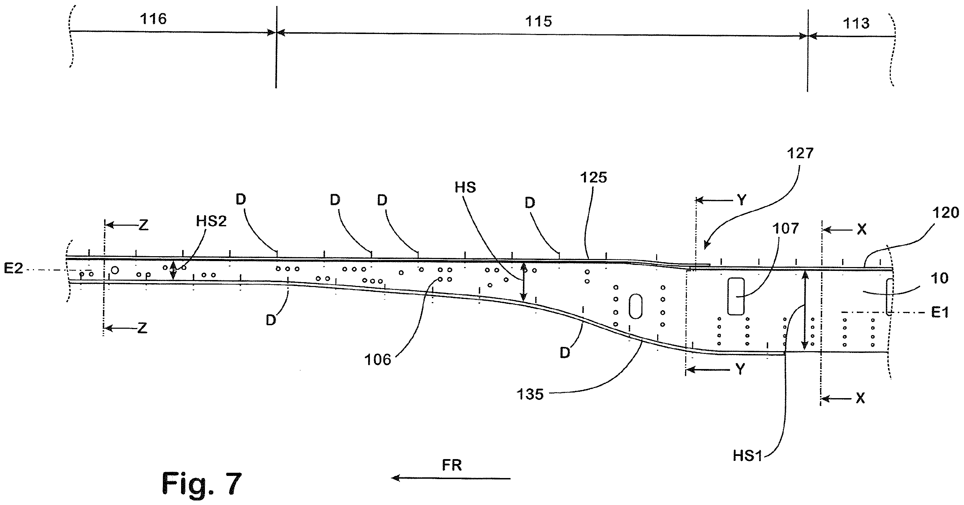

Die Form und der Verlauf des Übergangsabschnitts 115 sind dabei so gewählt, dass in der in den Figuren 5,6,7 dargestellten Gebrauchsposition des jeweiligen Profillangträgers 101,102 die Hauptrichtung der Längserstreckung L des ersten Längsabschnitts 113 in einer Horizontalebene E1 verläuft, die tiefer liegt als die Horizontalebene E2, in der die Hauptrichtung der Längserstreckung L des zweiten Längsabschnitts 116 verläuft, wobei die Längsabschnitte 113,116 im Bereich des zwischen ihnen liegenden Übergangsabschnitts 115 sprungfrei ineinander übergehen. Dementsprechend liegt in Gebrauchsposition der obere Gurtabschnitt 111 im Bereich des ersten Längsabschnitts 113 tiefer als im Bereich des zweiten Längsabschnitts 116, wobei er den Höhenvorsprung zwischen den Längsabschnitten 113,116 im Bereich des Übergangsabschnitts 116 in einem kontinuierlichen Kurvenzug sprungfrei überwindet.

Im Bereich des ersten Längsabschnitts 113 ist der obere Gurtabschnitt 111 durch ein streifenförmiges Verstärkungsblech 120 verstärkt, das flach auf die an der freien Oberseite des oberen Gurtabschnitts 111 vorhandene ebene Anlagefläche 121 gelegt ist. Mit seiner dem Steg 110 zugeordneten Kante ist das Verstärkungsblech 120 im Wesentlichen bündig zur vom oberen Gurtabschnitt 111 abgewandten Seitenfläche 110a des Stegs 110 ausgerichtet. Die Breite BV1 des Verstärkungsblechs 120 ist dabei so bemessen, dass es um einen geringen Überstand 122 seitlich nach außen über die vom Steg 110 abgewandte Kante 111a des oberen Gurtabschnitts 111 hinaus steht. Auf diese Weise ist nicht nur der obere Gurtabschnitt 111 durch das Verstärkungsblech 120 verstärkt, sondern an der freien Oberseite des Verstärkungsblechs 120 auch eine verbreitete Auflagefläche 120a für die auf dem Nutzfahrzeugchassis 100 zu montierenden, hier nicht gezeigten Aufbauten geschaffen.

Das beispielsweise 8 mm dicke Verstärkungsblech 120 besteht aus einem hochfesten Stahl und ist vor der Befestigung an dem Längsabschnitt 113 des Langprofils 105 ebenfalls vollständig mit einer Zinklamellenbeschichtung versehen worden. Da auch das Langprofil 105, wie voranstehend erläutert, vollständig mit einer Zinklamellenschicht belegt ist, ist auf diese Weise sichergestellt, dass im Fügespalt 123, der nach der Befestigung des Verstärkungsblechs 120 an dem Langprofil 105 unvermeidbar zwischen dem Verstärkungsblech 120 und dem Langprofil 105 besteht, die dort vorhandenen Anlageflächen von Verstärkungsblech 120 und oberem Gurtabschnitt 111 vollflächig mit der durch die Zinklamellenbeschichtung gebildeten Korrosionsschutzschicht bedeckt sind und so die Entstehung von Korrosion auch in diesem Bereich sicher vermieden ist.

Mit seinem der Rückseite 114 des Nutzfahrzeugchassis 100 zugeordneten Ende ist das Verstärkungsblech 120 bündig zum rückseitigen Ende des Langprofils 105 ausgerichtet und reicht, in Fahrtrichtung FR gesehen, bis zu dem Punkt des Übergangsabschnitts 115, an dem die Krümmung des oberen Gurtabschnitts 111 beginnt.

Im Bereich des Übergangsabschnitts 115 und des vorderen zweiten Längsabschnitts 116 ist der obere Gurtabschnitt 111 des Langprofils 105 ebenfalls durch ein auf ihn aufgelegtes Verstärkungsblech 125 verstärkt.

Wie das Verstärkungsblech 120 ist auch das Verstärkungsblech 125 vor seiner Montage zum Korrosionsschutz mit einer Zinklamellenbeschichtung belegt worden.

Das aus einem hochfesten Stahl gefertigte Verstärkungsblech 125 weist dabei eine Dicke von ca. 10 mm auf. Seine Breite BV2 ist so bemessen, dass das Verstärkungsblech 125 sowohl über die vom oberen Gurtabschnitt 111 abgewandte Seitenfläche 110a des Stegs 110 seitlich nach außen absteht als auch über die vom Steg 110 abgewandte seitliche Kante des oberen Gurtabschnitts hinaus steht. Gleichzeitig erstreckt sich das Verstärkungsblech 125 vom vorderen, der Stirnseite 117 des Nutzfahrzeugchassis 100 zugeordneten Ende des Langprofils 105 über dessen zweiten Längsabschnitts 116 und den Übergangsabschnitt 115, wobei es jeweils dicht auf der ihm zugeordneten, an der Oberseite des oberen Gurtabschnitts 111 gebildeten ebenen Auflagefläche 120a anliegt.

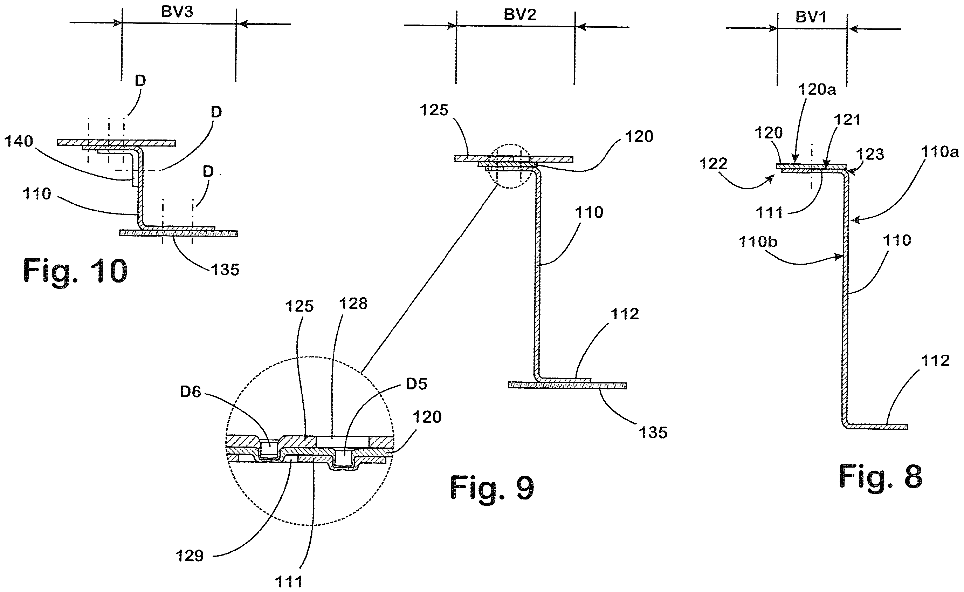

Das Verstärkungsblech 120 ist entgegen der Fahrtrichtung FR gesehen soweit über den im Übergangsabschnitt 115 gekrümmten Bereich des oberen Gurtabschnitts 111 hinausgeführt, dass es mit einem Endabschnitt den dem Übergangsabschnitt 115 zugeordneten Endabschnitt des ersten Verstärkungsblechs 120 in einer Überlappungszone 127 überlappt. Im Bereich der Überlappungszone liegen dementsprechend zwei Verstärkungsbleche 120, 125 aufeinandergestapelt auf dem oberen Gurtabschnitt 111 auf (Fig. 9). Um auch hier eine feste Verbindung der aufeinanderliegenden Verstärkungsbleche 120, 125 durch Durchsetzfügen zu ermöglichen, ist in das zuoberst liegende Verstärkungsblech 125 eine Öffnung 128 eingeformt, durch die ein hier nicht gezeigter Stößel eines Durchsetzfügewerkzeugs von oben her geführt werden kann, um das darunter liegende Verstärkungsblech 120 mit einer Durchsetzfügeverbindung D5 mit dem unter ihm angeordneten oberen Gurtabschnitt 111 zu verbinden. In entsprechender Weise ist seitlich nach außen versetzt in den oberen Gurtabschnitt 111 eine Öffnung 129 eingeformt, in die das beim Erzeugen einer Durchsetzfügeverbindung D6 zwischen den Verstärkungsblechen 120,125 nach unten verdrängte Material ausweichen kann bzw. durch die eine für die Herstellung der Durchsetzfügeverbindung D6 benötigte, hier nicht gezeigte Stütze gegen die Unterseite des auf dem oberen Gurtabschnitt aufliegenden Verstärkungsblechs 120 gerichtet werden kann.

Im Bereich des vorderen zweiten Längsabschnitts 116 und des Übergangsabschnitts 115 ist auch der untere Gurtabschnitt 112 des Langprofils durch ein wie die Verstärkungsbleche 120 und 125 mit einer Zinklamellenbeschichtung versehenes Verstärkungsblech 135 verstärkt, dessen Dicke ebenfalls 10 mm beträgt und dessen Breite BV3 wie beim Verstärkungsblech 125 so bemessen ist, dass das Verstärkungsblech 135 einerseits über die dem oberen Gurtabschnitt 111 zugeordnete Seitenfläche 110b des Stegs 110 hinaus steht und anderseits über die von der Seitenfläche 110a des Stegs 110 abgewandte Kante des unteren Gurtabschnitts 112 seitlich nach außen übersteht. Das untere Verstärkungsblech verläuft vom stirnseitigen Ende des Langprofils 105 entgegen der Fahrtrichtung FR bis zu dem Punkt des Übergangsabschnitts 115, an dem die Krümmung des unteren Gurtabschnitts 112 in einen linearen, der geradlinigen Ausrichtung des ersten Längsabschnitts 113 folgenden Verlauf übergeht.

In seinem vorderen stirnseitigen Bereich ist der zweite Längsabschnitt 117 des Langprofils zusätzlich durch ein winkelförmig gekantetes, ebenfalls vollständig mit einer Zinklamellenbeschichtung überzogenes Verstärkungsblech 140 ausgesteift, das mit seinem einen Schenkel 141 an der dem oberen Gurtabschnitt 111 zugeordneten Seitenfläche 110b des Stegs 110 und mit seinem anderen Schenkel 142 an der Unterseite des oberen Gurtabschnitts 111 anliegt.

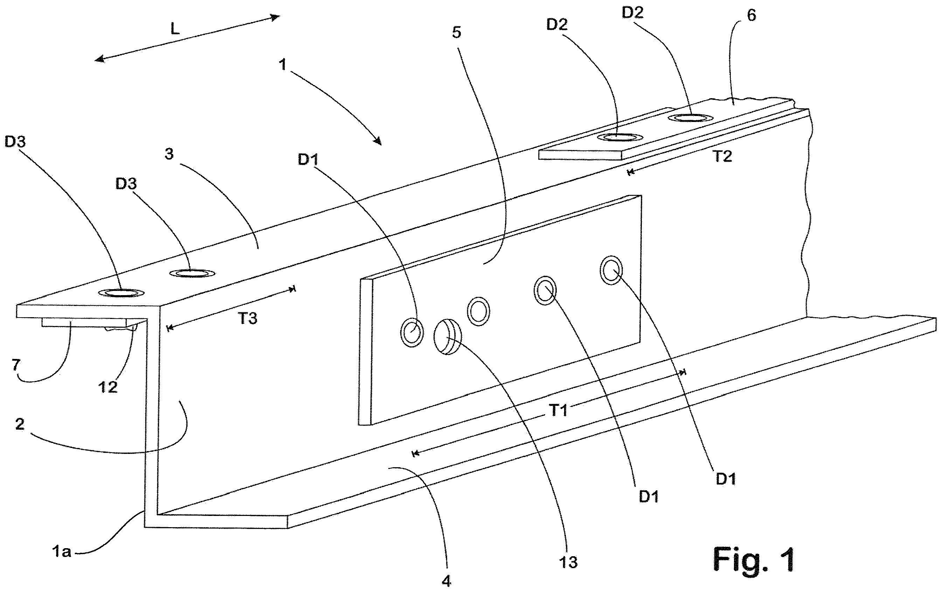

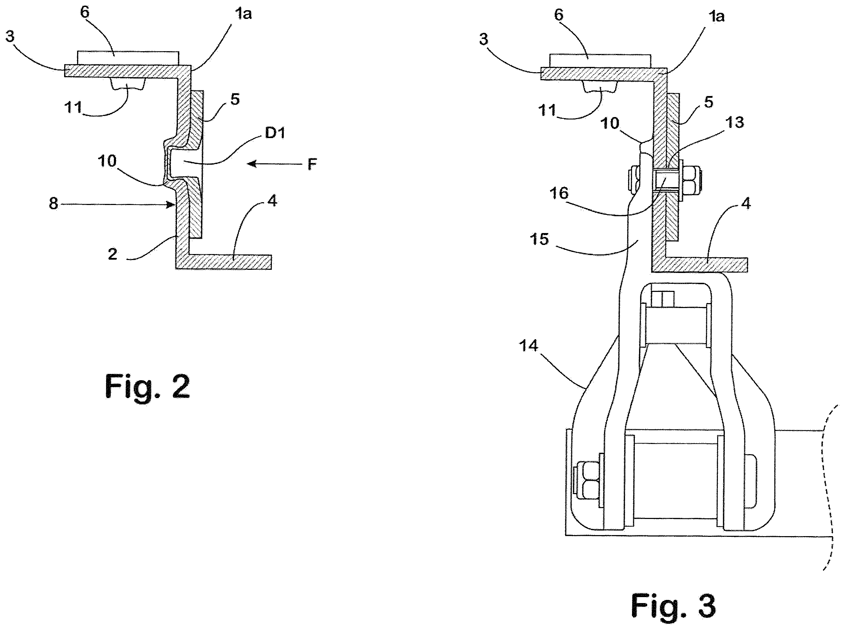

Die feste unlösbare Verbindung zwischen den Verstärkungsblechen 120,124,135 ist, wie bereits erwähnt, durch Durchsetzfügeverbindungen D,D5,D6 hergestellt, die nach Art der Durchsetzfügeverbindungen D1 - D4 ausgebildet sind, die bereits im Zusammenhang mit den in den Figuren 1 - 4 dargestellten Ausführungsbeispielen im Einzelnen erläutert worden sind.

| **BEZUGSZEICHEN** | **Bauteil** |
|---|---|
| 1 | Profillangträger |
| 1a | Z-förmiges Langprofil des Profillangträgers 1 |
| 2 | Steg des Langprofils 1a |
| 3 | oberer Gurtabschnitt des Langprofils 1a |
| 4 | unterer Gurtabschnitt des Langprofils 1a |
| 5 - 7 | Verstärkungsbleche |
| 8 | dem Gurtabschnitt 3 zugewandte Seitenfläche 8 des Stegs 2 |
| 9 | Unterseite des Gurts 3 |
| 10 | Ausstülpungen der Durchsetzfügeverbindungen D1 |
| 11 | Ausstülpungen der Durchsetzfügeverbindungen D2 |
| 12 | Ausstülpungen der Durchsetzfügeverbindungen D3 |
| 13 | Befestigungsöffnung |
| 14 | Fahrwerksbauteil (Federbockgehäuse) |
| 15 | Schenkel des Fahrwerksbauteil 14 |
| 16 | Schraube |
| 20 | Profillangträger |
| 20a | Langprofil des Profillangträgers 20 |
| 21 | oberer Gurtabschnitt des Langprofils 20a |
| 22 | Verstärkungsblech |
| 23, 26 | Überstände des Verstärkungsblechs 22 in Breitenrichtung B |
| 24 | Steg des Langprofils 20a |
| 25, 27 | Längskanten des Langprofils 20a |
| 28 | unterer Gurtabschnitt des Langprofils 20a |
| 29 | Durchgangsöffnungen |
| | |
| B | Breitenrichtung des Profillangträgers 20 |
| D1 - D4 | Durchsetzfügeverbindungen |
| F | Fügerichtung |
| L | Längsrichtung der Profillangträger |
| LP | Länge des Langprofils 20a |
| T1 - T3 | Teilstücke des Langprofils 1a |
| | |
| 100 | Nutzfahrzeugchassis |
| 101, 102 | Profillangträger |
| 103 | Querträger |
| 104 | Hilfslangträger |
| 105 | Z-förmiges Langprofil |
| 106 | Bohrungen |
| 107 | Aufnahmen |
| 110 | Steg des Langprofils 105 |
| 110a | Seitenfläche des Stegs 110 |
| 110b | Seitenfläche des Stegs 110 |
| 111 | oberer Gurtabschnitt des Langprofils 105 |
| 111a | Kante des oberen Gurtabschnitts 111 |
| 112 | unterer Gurtabschnitt des Langprofils 105 |
| 113 | erster Längenabschnitt des Langprofils 105 |
| 114 | Rückseite des Nutzfahrzeugchassis 100 |
| 115 | Übergangsabschnitt des Langprofils 105 |
| 116 | zweiter Längsabschnitt des Langprofils 105 |
| 117 | in Fahrtrichtung FR vordere Stirnseite des Nutzfahrzeugchassis 100 |
| 120 | Verstärkungsblech |
| 120a | Auflagefläche |
| 121 | Anlagefläche an der oberen freien Seite des oberen Gurtabschnitts 111 |
| 122 | Überstand |
| 123 | Fügespalt |
| 125 | Verstärkungsblech |
| 127 | Überlappungszone |
| 128 | Öffnung |
| 129 | Öffnung |
| 135 | Verstärkungsblech |
| 140 | Verstärkungsblech |
| BV1 | Breite des Verstärkungsblechs 120 |
| BV2 | Breite des Verstärkungsblechs 125 |
| BV3 | Breite des Verstärkungsblechs 135 |
| D,D5,D6 | Durchsetzfügeverbindungen |
| E1 | Horizontalebene |
| E2 | Horizontalebene |
| FR | Fahrtrichtung |
| FR | Fahrtrichtung |
| HS | Höhe des Stegs 110 im Übergangsabschnitt 115 |
| HS1 | Höhe des Stegs 110 im Bereich des ersten Längenabschnitts 113 |
| HS2 | Höhe des Stegs 110 im Bereich des zweiten Längenabschnitts 116 |
| LP | Länge des Nutzfahrzeugchassis 100 |

## Patentansprüche

1. Nutzfahrzeugchassis mit wenigstens einem Profillangträger (1,20,101,102), der ein sich in Längsrichtung (L) des Profillangträgers (1,20,101,102) erstreckendes, durch ein Umformverfahren aus einem Blechmaterial geformtes Langprofil (1a,20a,105) umfasst, das mit einer Korrosionsschutzschicht beschichtet ist und einen Steg (2,110) aufweist, wobei an einem Teilstück des Langprofils (1a,20a,105) ein Verstärkungsblech (5-7,22,120,125, 135) unlösbar befestigt ist, um das Langprofil (1a,20a,105) durch das Verstärkungsblech (5-7,22,120,125, 135) lokal zu verstärken oder auszusteifen, **dadurch gekennzeichnet, dass** das Verstärkungsblech (5-7, 22, 120, 125, 135) ausschließlich form- oder kraftschlüssig mit dem Langprofil (1a,20a,105) verbunden ist.

2. Nutzfahrzeugchassis nach Anspruch 1, **dadurch gekennzeichnet, dass** das Verstärkungsblech (5-7,22,120,125, 135) und/oder das Langprofil (1a, 20a, 105) jeweils vor dem Befestigen des Verstärkungsblechs (5-7, 22, 120, 125,135) an dem Langprofil (1a, 20a, 105) mit einer Korrosionsschutzschicht versehen sind.

3. Nutzfahrzeugchassis nach einem der voranstehenden Ansprüche1, **dadurch gekennzeichnet, dass** das Langprofil (1a, 20a, 105) des Profillangträgers (1, 20, 101, 102) mindestens einen seitlich von dem Steg (2,110) abstehenden Gurtabschnitt (3, 4, 21, 28, 111, 112) aufweist.

4. Nutzfahrzeugchassis nach Anspruch 3, **dadurch gekennzeichnet, dass** der Gurtabschnitt (3, 4, 21, 28, 111, 112) des Langprofils (1a, 20a, 105) des Profillangträgers (1,20,101,102) einstückig mit dem Steg (2, 110) des Profillangträgers (1,20,101,102) verbunden ist.

5. Nutzfahrzeugchassis nach Anspruch 3 oder 4, **dadurch gekennzeichnet, dass** sich der Gurtabschnitt (3, 4, 21, 28, 111, 112) über mindestens ein Teilstück oder die gesamte Länge des Stegs (2,110) des Langprofils (1a, 20a, 105) des Profillangträgers (1, 20, 101, 102) erstreckt.

6. Nutzfahrzeugchassis nach einem der voranstehenden Ansprüche, **dadurch gekennzeichnet, dass** die form-oder kraftschlüssige Verbindung zwischen dem Verstärkungsblech (5-7, 22, 120, 125, 135) und dem Langprofil (1a, 20a, 105) des Profillangträgers (1, 20, 101, 102) durch mindestens eine Durchsetzfügeverbindung (D,D1-D6) hergestellt ist.

7. Nutzfahrzeugchassis nach einem der voranstehenden Ansprüche, **dadurch gekennzeichnet, dass** sich entlang der oberen und entlang der unteren Längskante des Stegs (2,110) jeweils ein Gurtabschnitt (3, 4, 21, 28, 111, 112) des Langprofils (1a, 20a, 105) des Profillangträgers (1, 20, 101, 102) erstreckt.

8. Nutzfahrzeugchassis nach Anspruch 7, **dadurch gekennzeichnet, dass** der Abstand der Gurtabschnitte (3,4,21,28,111,112) über die Länge des Langprofils (1a, 20a, 105) des Profillangträgers (1, 20, 101, 102) variiert.

9. Nutzfahrzeugchassis nach einem der voranstehenden Ansprüche, **dadurch gekennzeichnet, dass** das Langprofil (1a, 20a, 105) des Profillangträgers (1,20,101,102) mindestens abschnittsweise im Querschnitt I-, T-, U- oder Z-förmig ist.

10. Nutzfahrzeugchassis nach einem der voranstehenden Ansprüche, **dadurch gekennzeichnet, dass** das Langprofil (1a, 20a, 105) des Profillangträgers (1, 20, 101, 102) einen ersten Längsabschnitt (113) und einen zweiten Längsabschnitt (116) aufweist, d a s s in Gebrauchsposition die Hauptrichtung der Längserstreckung des ersten Längsabschnitts (113) in einer anderen Horizontalebene (E1) verläuft als die Hauptrichtung der Längserstreckung des anderen Längsabschnitts (116) und d a s s die Längsabschnitte (113, 116) sprungfrei ineinander übergehen.

11. Nutzfahrzeugchassis nach einem der voranstehenden Ansprüche, **dadurch gekennzeichnet, dass** die Höhe (HS2) des Stegs (2,110) in einen Längsabschnitt (113) des Langprofils (1a, 20a, 105) geringer ist als in einem anderen Längsabschnitt (116) des Langprofils (1a, 20a, 105) des Profillangträgers (1, 20, 101, 102) und dass sich die Höhe (HS) des Stegs (2,110) im Bereich des Übergangs (115) von dem einen Längsabschnitt (113) zu dem anderen Längsabschnitt (116) kontinuierlich ändert.

12. Nutzfahrzeugchassis nach einem der voranstehenden Ansprüche, **dadurch gekennzeichnet, dass** zwei oder mehr Verstärkungsbleche (5-7, 22, 120, 125, 135) aufeinander liegend an dem Langprofil (1a, 20a, 105) des Profillangträgers (1,20,101,102) befestigt sind.

13. Verfahren zum Herstellen eines Profillangträgers (1, 20, 101, 102) für ein Nutzfahrzeugchassis (100) umfassend folgende Arbeitsschritte:
a) Bereitstellen eines Stahlflachprodukts,
b) Umformen des Stahlflachprodukts zu einem Langprofil (1a, 20a, 105),
c) Bereitstellen und Anordnen eines Verstärkungsblechs (5-7, 22, 120, 125, 135) an einem Teilstück des umgeformten Langprofils (1a, 20a, 105),
d) Erzeugen einer ausschließlich form- oder kraftschlüssigen Verbindung (D,D1-D6) zwischen dem Verstärkungsblech (5-7,22,120,125,135) und dem umgeformten Langprofil (1a, 20a, 105), um das Verstärkungsblech (5-7, 22, 120, 125, 135) unverlierbar an einer Anlagefläche des Langprofils (1a, 20a, 105) zu befestigen und eine lokale Verstärkung oder Aussteifung des Langprofils (1a, 20a, 105) zu bewirken.

14. Verfahren nach Anspruch 13, **dadurch gekennzeichnet, dass** das Stahlflachprodukt vor dem Umformen zu dem Langprofil (1a, 20a, 105) mit einer Korrosionsschutzbeschichtung versehen wird.

15. Verfahren nach Anspruch 13, **dadurch gekennzeichnet, dass** das Langprofil (1a, 20a, 105) vor der Befestigung des Verstärkungsblechs (5-7, 22, 120, 125, 135) mit einer Korrosionsschutzbeschichtung versehen wird.

16. Verfahren nach einem der Ansprüche 13 bis 15, **dadurch gekennzeichnet, dass** das Verstärkungsblech (5-7, 22, 120, 125, 135) vor seiner Befestigung an dem Langprofil (1a, 20a, 105) mit einer Korrosionsschutzbeschichtung versehen wird.

17. Verfahren nach einem der Ansprüche 14 bis 16, **dadurch gekennzeichnet, dass** die jeweilige Korrosionsschutzbeschichtung als Zinklamellenüberzug aufgetragen wird.

18. Verfahren nach einem der Ansprüche 13 bis 17, **dadurch gekennzeichnet, dass** das Stahlflachprodukt durch Rollieren zu dem Langprofil (1a, 20a, 105) umgeformt wird.

19. Verfahren nach einem der 13 bis 18 Ansprüche, **dadurch gekennzeichnet, dass** die form- oder kraftschlüssige Verbindung (D,D1-D6) zwischen dem Verstärkungsblech (5-7, 22, 120, 125, 135) und dem umgeformten Langprofil (1a, 20a, 105) durch Durchsetzfügen erzeugt wird.

## Claims

1. Utility vehicle chassis having at least one profile longitudinal beam (1, 20, 101, 102), which comprises a longitudinal profile (1a, 20a, 105) formed by a forming process from a sheet material, extending in the longitudinal direction (L) of the profile longitudinal beam (1, 20, 101,102), which is coated with a corrosion prevention layer and has a web (2, 110), wherein a reinforcing plate (5-7, 22, 120, 125, 135) is non-detachably fastened to one part of the longitudinal profile (1a, 20a, 105), in order to reinforce or to stiffen the longitudinal profile (1a, 20a, 105) locally through the reinforcing plate (5-7, 22, 120, 125, 135), **characterised in that** the reinforcing plate (5-7, 22, 120, 125, 135) is connected exclusively in a form-locking or force-locking manner to the longitudinal profile (1a, 20a, 105).

2. Utility vehicle chassis according to Claim 1, **characterised in that** the reinforcing plate (5-7, 22, 120, 125, 135) and/or the longitudinal profile (1a, 20a, 105) in each case before the fastening of the reinforcing plate (5-7, 22, 120, 125, 135) to the longitudinal profile (1a, 20a, 105) are provided with a corrosion prevention layer.

3. Utility vehicle chassis according to any one of the preceding claims, **characterised in that** the longitudinal profile (1a, 20a, 105) of the profile longitudinal beam (1, 20, 101, 102) has at least one belt section (3, 4, 21, 28, 111, 112) protruding laterally from the web (2, 110).

4. Utility vehicle chassis according to Claim 3, **characterised in that** the belt section (3, 4, 21, 28, 111, 112) of the longitudinal profile (1a, 20a, 105) of the profile longitudinal beam (1, 20, 101, 102) is connected in one piece with the web (2, 110) of the profile longitudinal beam (1, 20, 101, 102).

5. Utility vehicle chassis according to Claim 3 or 4, **characterised in that** the belt section (3, 4, 21, 28, 111, 112) extends over at least one part or the entire length of the web (2, 110) of the longitudinal profile (1a, 20a, 105) of the profile longitudinal beam (1, 20, 101, 102).

6. Utility vehicle chassis according to any one of the preceding claims, **characterised in that** the form-locking or force-locking connection between the reinforcing plate (5-7, 22, 120, 125, 135) and the longitudinal profile (1a, 20a, 105) of the profile longitudinal beam (1, 20, 101, 102) is established by at least one clinching connection (D, D1-D6).

7. Utility vehicle chassis according to any one of the preceding claims, **characterised in that** in each case a belt section (3, 4, 21, 28, 111, 112) of the longitudinal profile (1a, 20a, 105) of the profile longitudinal beam (1, 20, 101, 102) extends along the upper and along the lower longitudinal edge of the web (2, 110).

8. Utility vehicle chassis according to Claim 7, **characterised in that** the distance of the belt sections (3, 4, 21, 28, 111, 112) varies over the length of the longitudinal profile (1a, 20a, 105) of the profile longitudinal beam (1, 20, 101 102).

9. Utility vehicle chassis according to any one of the preceding claims, **characterised in that** the longitudinal profile (1a, 20a, 105) of the profile longitudinal beam (1, 20, 101, 102) is I-, T-, U- or Z-shaped at least in sections in the cross section.

10. Utility vehicle chassis according to any one of the preceding claims, **characterised in that** the longitudinal profile (1a, 20a, 105) of the profile longitudinal beam (1, 20, 101, 102) has a first longitudinal section (113) and a second longitudinal section (116), that in the position of use the main direction of the longitudinal extension of the first longitudinal section (113) runs in a different horizontal plane (E1) than the main direction of the longitudinal extension of the other longitudinal section (116) and that the longitudinal sections (113, 116) merge steplessly.

11. Utility vehicle chassis according to any one of the preceding claims, **characterised in that** the height (HS2) of the web (2, 110) in a longitudinal section (113) of the longitudinal profile (1a, 20a, 105) is less than in another longitudinal section (116) of the longitudinal profile (1a, 20a, 105) of the profile longitudinal beam (1, 20, 101, 102) and that the height (HS) of the web (2, 110) in the area of the transition (115) from the one longitudinal section (113) to the other longitudinal section (116) changes continuously.

12. Utility vehicle chassis according to any one of the preceding claims, **characterised in that** two or more reinforcing plates (5-7, 22, 120, 125, 135) are fastened on top of each other to the longitudinal profile (1a, 20a, 105) of the profile longitudinal beam (1, 20, 101, 102).

13. Method for the manufacture of a profile longitudinal beam (1, 20, 101, 102) for a utility vehicle chassis (100) comprising the following work steps:
a) Provision of a flat steel product,
b) Forming of the flat steel product into a longitudinal profile (1a, 20a, 105),
c) Provision and arrangement of a reinforcing plate (5-7, 22, 120, 125, 135) on a part of the formed longitudinal profile (1a, 20a, 105),
d) Creation of an exclusively form-locking or force-locking connection (D, D1-D6) between the reinforcing plate (5-7, 22, 120, 125, 135) and the formed longitudinal profile (1a, 20a, 105), in order to fasten the reinforcing plate (5-7, 22, 120, 125, 135) undetachably to the contact surface of the longitudinal profile (1a, 20a, 105) and to bring about a local reinforcement or stiffening of the longitudinal profile (1a, 20a, 105).

14. Method according to Claim 13, **characterised in that** the flat steel product is provided with a corrosion prevention coating before the forming into the longitudinal profile (1a, 20a, 105).

15. Method according to Claim 13, **characterised in that** the longitudinal profile (1a, 20a, 105) is provided with a corrosion prevention coating before the fastening of the reinforcing plate (5-7, 22, 120, 125, 135).

16. Method according to any one of Claims 13 to 15, **characterised in that** the reinforcing plate (5-7, 22, 120, 125, 135) is provided with a corrosion prevention coating before its fastening to the longitudinal profile (1a, 20a, 105).

17. Method according to any one of Claims 14 to 16, **characterised in that** the respective corrosion prevention coating is applied as a zinc flake coating.

18. Method according to any one of Claims 13 to 17, **characterized in that** the flat steel product is formed by rolling into the longitudinal profile (1a, 20a, 105).

19. Method according to any one of Claims 13 to 18, **characterised in that** the form-locking or force-locking connection (D, D1-D6) between the reinforcing plate (5-7, 22, 120, 125, 135) and the formed longitudinal profile (1a, 20a, 105) is created by clinching.

## Revendications

1. Châssis de véhicule utilitaire comprenant au moins un longeron profilé (1, 20, 101, 102) qui comprend un profilé allongé (1a, 20a, 105), réalisé en soumettant un matériau en tôle à un procédé de formage, qui s'étend dans le sens longitudinal (L) du longeron profilé (1, 20, 101, 102) et qui est revêtu d'une couche anticorrosion, et qui présente un élément de liaison (2, 110), auquel cas une tôle de renforcement (5-7, 22, 120, 125, 135) est fixée de manière non-démontable sur une partie du profilé allongé (1a, 20a, 105) afin de renforcer ou rigidifier localement le profilé allongé (1a, 20a, 105) à l'aide de la tôle de renforcement (5-7, 22, 120, 125, 135), **caractérisé en ce que** la tôle de renforcement (5-7, 22, 120, 125, 135) est reliée exclusivement par liaison de forme ou de force au profilé allongé (1a, 20a, 105).

2. Châssis de véhicule utilitaire selon la revendication 1, **caractérisé en ce que** la tôle de renforcement (5-7, 22, 120, 125, 135) et/ou le profilé allongé (1a, 20a, 105) sont pourvus d'une couche anticorrosion respectivement avant la fixation de la tôle de renforcement (5-7, 22, 120, 125,135) sur le profilé allongé (1a, 20a, 105).

3. Châssis de véhicule utilitaire selon une des revendications précédentes, **caractérisé en ce que** le profilé allongé (1a, 20a, 105) du longeron profilé (1,20, 101, 102) présente au moins une section de sangle (3, 4, 21, 28, 111, 112) faisant saillie du côté de l'élément de liaison (2,110).

4. Châssis de véhicule utilitaire selon la revendication 3, **caractérisé en ce que** la section de sangle (3, 4, 21, 28, 111, 112) du profilé allongé (1a, 20a, 105) du longeron profilé (1, 20, 101, 102) est reliée d'une seule pièce avec l'élément de liaison (2, 110) du longeron profilé (1, 20, 101, 102).

5. Châssis de véhicule utilitaire selon la revendication 3 ou 4, **caractérisé en ce que** la section de sangle (3, 4, 21, 28, 111, 112) s'étend sur au moins une partie ou sur l'ensemble de la longueur de l'élément de liaison (2, 110) du profilé allongé (1a, 20a, 105) du longeron profilé (1, 20, 101, 102).

6. Châssis de véhicule utilitaire selon une des revendications précédentes, **caractérisé en ce que** la liaison de forme ou de force entre la tôle de renforcement (5-7, 22, 120, 125, 135) et le profilé allongé (1a, 20a, 105) du longeron profilé (1, 20, 101, 102) est produite par une liaison d'assemblage par interpénétration (D, D1-D6).

7. Châssis de véhicule utilitaire selon une des revendications précédentes, **caractérisé en ce que** le long du bord longitudinal supérieur et inférieur de l'élément de liaison (2, 110) s'étend respectivement une section de sangle (3, 4, 21, 28, 111, 112) du profilé allongé (1a, 20a, 105) du longeron profilé (1, 20, 101, 102).

8. Châssis de véhicule utilitaire selon la revendication 7, **caractérisé en ce que** la distance de la section de sangle (3, 4, 21, 28, 111, 112) au-delà de la longueur du profilé allongé (1a, 20a, 105) du longeron profilé (1, 20, 101, 102) varie.

9. Châssis de véhicule utilitaire selon une des revendications précédentes, **caractérisé en ce que** le profilé allongé (1a, 20a, 105) du longeron profilé (1, 20, 101, 102) est en forme de I, T, U ou Z en section transversale, au moins de façon segmentaire.

10. Châssis de véhicule utilitaire selon une des revendications précédentes, **caractérisé en ce que** le profilé allongé (1a, 20a, 105) du longeron profilé (1, 20, 101, 102) présente une première section longitudinale (113) et une deuxième section longitudinale (116), et que, en une position d'utilisation, la direction principale de l'extension longitudinale de la première section longitudinale (113) s'étend dans un autre plan horizontal (El) que la direction principale de l'extension longitudinale de l'autre section longitudinale (116) et que les sections longitudinales (113, 116) s'entrecroisent sans écarts.

11. Châssis de véhicule utilitaire selon une des revendications précédentes, **caractérisé en ce que** la hauteur (HS2) de l'élément de liaison (2, 110) en une section longitudinale (113) du profilé allongé (1a, 20a, 105) est inférieure que dans une autre section longitudinale (116) du profilé allongé (1a, 20a, 105) du longeron profilé (1, 20, 101, 102) et que la hauteur (HS) de l'élément de liaison (2, 110) dans la zone de transition (115) d'une section longitudinale (113) vers l'autre section longitudinale (116) change continuellement.

12. Châssis de véhicule utilitaire selon une des revendications précédentes, **caractérisé en ce que** deux ou plusieurs tôles de renforcement (5-7, 22, 120, 125, 135) superposées sont fixées sur le profilé allongé (1a, 20a, 105) du longeron profilé (1, 20, 101, 102).

13. Procédé de fabrication d'un longeron profilé (1, 20, 101, 102) pour un châssis de véhicule utilitaire (100) comportant les étapes de travail suivantes :
a) Mise à disposition d'un produit plat en acier,
b) Transformation du produit plat en acier en un profilé allongé (1a, 20a, 105),
c) Mise à disposition et agencement d'une tôle de renforcement (5- 7, 22, 120, 125, 135) sur une partie du profilé allongé transformé (1a, 20a, 105),
d) Production exclusivement d'une liaison de forme ou de force (D, D1-D6) entre la tôle de renforcement (5-7, 22, 120, 125, 135) et le profilé allongé transformé (1a, 20a, 105), afin de fixer la tôle de renforcement (5-7, 22, 120, 125, 135) de manière imperdable sur une surface d'appui du profilé allongé (1a, 20a, 105) et d'entraîner un renforcement ou raidissement local du profilé allongé (1a, 20a, 105).

14. Procédé selon la revendication 13, **caractérisé en ce que** le produit plat en acier est pourvu d'un revêtement anticorrosion avant la transformation du profilé allongé (1a, 20a, 105).

15. Procédé selon la revendication 13, **caractérisé en ce que** le profilé allongé (1a, 20a, 105) est pourvu d'un revêtement anticorrosion avant la fixation de la tôle de renforcement (5-7, 22, 120, 125, 135).

16. Procédé selon une des revendications de 13 à 15, **caractérisé en ce que** la tôle de renforcement (5-7, 22, 120, 125, 135) est pourvu d'un revêtement anticorrosion avant sa fixation sur le profilé allongé (1a, 20a, 105).

17. Procédé selon une des revendications de 14 à 16, **caractérisé en ce que** le revêtement anticorrosion respectif est appliqué en tant que revêtement de zinc lamellaire.

18. Procédé selon une des revendications de 13 à 17, **caractérisé en ce que** le produit plat en acier est transformé par roulage en un profilé allongé (1a, 20a, 105).

19. Procédé selon une des revendications de 13 à 18, **caractérisé en ce que** la liaison de forme ou de force (D, D1-D6) entre la tôle de renforcement (5-7, 22, 120, 125, 135) et le profilé allongé transformé (la, 20a, 105) est produite par un assemblage par interpénétration.
